# EUROPEAN PATENT APPLICATION

(11) **EP 3 364 312 A1**
(43) Date of publication of application: **22.08.2018**
(21) Application number: 17195216.1
(22) Date of filing: 06.10.2017
(51) Int. Cl.: G06F 17/30

(54) **SEARCHING KEYWORD SUGGESTING DEVICE**

(30) Priority: 17.02.2017 TW 106105174
(71) Applicant: Integral Search International Limited, Taipei City 11063 (TW)
(72) Inventor: TSAI, Hong-Shin, 11063 Taipei City (TW)
(74) Representative: Morris, Jonathan Paul

(57) **Abstract**

The present invention provides a searching keyword suggesting device comprising: a searching keyword executing module that performs, based on a searching keyword, a claim searching operation in a patent database to obtain the searched patent including element definition and description definition with the searching keyword appearing in the designated structural attribute; a definition statistics executing module that obtains a deduced element definition and a deduced description definition by performing statistics calculation, for the searched result patents, of the element definitions and the description definitions that are informationally belonged to respective structural attributes; and a suggested keyword providing module that provides the suggested keyword by retrieving a word from the deduced element definition and/or the deduced description definition that are informationally belonged to respective structural attribute.

## Description

### FIELD OF THE INVENTION

The present invention relates to a searching keyword suggesting device, and more particularly relates to a searching keyword suggesting device which provides a suggested searching keyword based on informational relationship by applying a structural attribute of patent claim.

### BACKGROUND OF THE INVENTION

A correct patent searching result depends on a correct searching keyword. Based on the fact that the claims are a core of patent, a claim searching performed in a more precise way can bring a patent searching result more trustable. Therefore a searching to claims is considered an effective way to improve a patent searching. However, in the patent searching systems of prior arts, a claim is searched in a whole where a user can only decide keywords of specification or keywords of claims in such a manner that a searching to claims cannot be extended to the detailed structure of the claims. In other words, the prior arts are unable to further search the detailed structure, and thus cause a searching result less precise. The detail structure comprises: (a) an element definition such as a subject matter, a primary element and a secondary element; and (b) a description definition such as an interrelationship definition and a supplemental definition. That is, in the patent searching of prior arts, even though a searching keyword is used to perform a searching to claims, the importance degree of the searching keyword to the claims are not ensured, because it is not confirmed that the keyword is related to a subject matter, a primary element, a secondary element, an interrelationship definition or a supplemental definition. In prior arts, only the appearing positions of the searching keywords are shown in the claims such that a user has to study the importance degree of the searching keyword depending on her/his own experience and knowledge. Until now, the reasons that the detailed structure cannot be further classified by the prior arts are caused by the requirement of complicated operating logic to handle such enormous amount of patent data.

In addition, in the patent searching systems of a prior art, a searching keyword suggesting mechanism is not only rarely seen, but also unscientific for its searching keyword suggesting method. The searching keyword suggesting methods of prior arts are performed by establishing synonym relationships among tremendous words. However, this kind of searching keyword suggesting method is inevitable of requiring building an enormous amount of less used words. Accordingly, the searching keyword suggesting methods of prior arts are with low efficiency and low popularity.

### SUMMARY OF THE INVENTION

Therefore, an objective of the present invention is to provide a searching keyword suggesting device to be the solution for the technical problem mentioned above.

In order to achieve the above, the present invention provides a searching keyword suggesting device that, in a patent searching, uses a searching keyword to provide a suggested keyword with informational relationship to the searching keyword, the searching keyword suggesting method comprising: a searching keyword executing module that performs, based on the searching keyword, a claim searching operation and/or a description searching operation and/or a bibliographic data searching operation for data in a patent database to obtain a patent searching result including a plurality of searched result patents, each searched result patent including at least one element definition and at least one description definition, each element definition and each description definition being informationally related to one structural attribute which is one selected from a subject matter attribute, an element noun attribute, an interrelationship definition attribute and a supplemental definition section attribute; a definition statistics executing module that obtains a deduced element definition and a deduced description definition by performing statistics calculation, for the searched result patents, of the element definitions and the description definitions that are informationally belonged to respective structural attributes; and a suggested keyword providing module that provides the suggested keyword by retrieving a word from the deduced element definition and/or the deduced description definition that are informationally belonged to respective structural attribute.

In one embodiment of the present invention, a searching keyword suggesting device is provided that the deduced element definition and the deduced description definition obtained by the definition statistics executing module are definitions different from the searching keyword but with the same informationally related structural attribute to which the searching keyword are designated in the claim searching operation of the patent database performed by the searching keyword executing module, the informationally related structural attribute is one selected from an informationally related subject matter attribute and/or an informationally related element noun attribute and/or an informationally related interrelationship definition attribute and/or an informationally related supplemental definition section attribute and/or an informationally related description attribute and an informationally related abstract attribute and/or a bibliographic data attribute.

In one embodiment of the present invention, a searching keyword suggesting device is provided that the searching keyword is searched in way of equivalent comparison and/or in way of partial comparison to the element definition and the description definition having the informationally related structural attribute designated in the claim searching operation and/or the description searching operation and/or the bibliographic data searching operation.

In one embodiment of the present invention, a searching keyword suggesting device is provided that the searching keyword is searched in way of equivalent comparison and/or in way of partial comparison to the element definition and the description definition having the informationally related structural attribute designated in the claim searching operation and/or the description searching operation and/or the bibliographic data searching operation.

In one embodiment of the present invention, a searching keyword suggesting device is provided that the definition statistics executing module further includes an original part-of-speech format reverting sub-module that reverts, for the searched result patents of the patent searching result, the part-of-speech format of the element definition and the description definition of the structural attributes to an original part-of-speech format, and performs statistics calculation of the element definition and the description definition based on the original part of speech format.

In one embodiment of the present invention, a searching keyword suggesting device is provided that the definition statistics executing module further includes an original part-of-speech format reverting sub-module that reverts, for the searched result patents of the patent searching result, the part-of-speech format of the element definition and the description definition of the structural attributes to an original part-of-speech format, and performs statistics calculation of the element definition and the description definition based on the original part of speech format.

In one embodiment of the present invention, a searching keyword suggesting device is provided that the definition statistics executing module counts the occurrence times of the deduced element definition and the deduced description definition of structural attribute, sorts a sequence of the deduced element definition and the deduced description definition of structural attribute according to the occurrence times to obtain a sorting result, and enables the suggested keyword providing module to provide the suggested keyword from the deduced element definition and the deduced description definition of the structural attributes according to the sorting result of the deduced element definition and the deduced description definition of structural attributes.

In one embodiment of the present invention, a searching keyword suggesting device is provided that definition statistics executing module counts the occurrence times of the deduced element definition and the deduced description definition of structural attribute, sorts a sequence of the deduced element definition and the deduced description definition of structural attribute according to the occurrence times to obtain a sorting result, and enables the suggested keyword providing module to provide the suggested keyword from the deduced element definition and the deduced description definition of the structural attributes according to the sorting result of the deduced element definition and the deduced description definition of structural attributes.

In one embodiment of the present invention, a searching keyword suggesting device is provided that the suggested keyword providing module is further followed by a suggested keyword choosing module that provides a keyword choosing interface on which a user chooses the suggested keyword provided by the suggested keyword providing module.

In one embodiment of the present invention, a searching keyword suggesting device is provided that the suggested keyword providing module is further followed by a suggested keyword choosing module that provides a keyword choosing interface on which a user chooses the suggested keyword provided by the suggested keyword providing module.

In one embodiment of the present invention, a searching keyword suggesting device is provided that after the suggested keyword provided by the suggested keyword providing module is chosen, a patent amount and/or a patent amount variation of the plurality of searched result patents is shown.

In one embodiment of the present invention, a searching keyword suggesting device is provided that after the suggested keyword provided by the suggested keyword providing module is chosen, a patent amount and/or a patent amount variation of the plurality of searched result patents is shown.

The searching keyword suggesting device of the present invention uses the structural attribute of the claims as the informational relation basis for operations of data deduction or data induction. The searching keyword suggesting device of the present invention uses a searching keyword/searching keywords to perform a patent claim searching process in the patent database to obtain the element definitions and/or description definitions in the searched patent having the searching keyword in the designated structural attribute, thereafter performing statistics and sorting the acquired element definitions and/or description definitions as the suggested keywords. By means of the searching keyword suggesting device of the present invention, the keywords being informationally related to the searching keyword is with advantage of getting close to real patent practicing. Therefore the present invention is more scientific and logical compared to the synonym method of the prior arts. Thus the searching accuracy will be consequently improved and the searching result amount can be greatly decreased because of a correct operation in data induction. Besides, the operation of deduction of the present invention is more scientific.

### BRIEF DESCRIPTION OF THE DRAWINGS

The preferred embodiments of the present invention are explained below with reference to appended drawings.
Fig. 1 shows a schematic diagram of a keyword searching interface before searching according to one embodiment of the present invention.
Fig. 2 shows a schematic diagram of the keyword searching interface after searching according to the embodiment of the present invention.
Fig. 3a, Figs 3b and Fig.3c each shows a schematic diagram of a single searched result patent.
Fig. 4 shows a schematic diagram of suggested keywords choosing of the keyword searching interface according the embodiment of the present invention.
Fig. 5 shows a schematic diagram of another suggested keywords choosing of the keyword searching interface according the embodiment of the present invention.
Fig. 6 shows a schematic diagram of suggested keywords choosing of the keyword searching interface according another embodiment of the present invention.
Fig. 7 and Fig. 8 show the displays of the suggested keywords to choose subsequently of the keyword choosing interface according the embodiment of the present invention.
Fig. 9 shows a flow diagram of the searching keyword suggesting method of patent searching according to the embodiment of the present invention.
Fig. 10 shows a schematic diagram of the searching keyword suggesting method of patent searching according to the embodiment of the present invention.

### DETAILED DESCRIPTION OF THE PREFERRED EMBODIMENTS

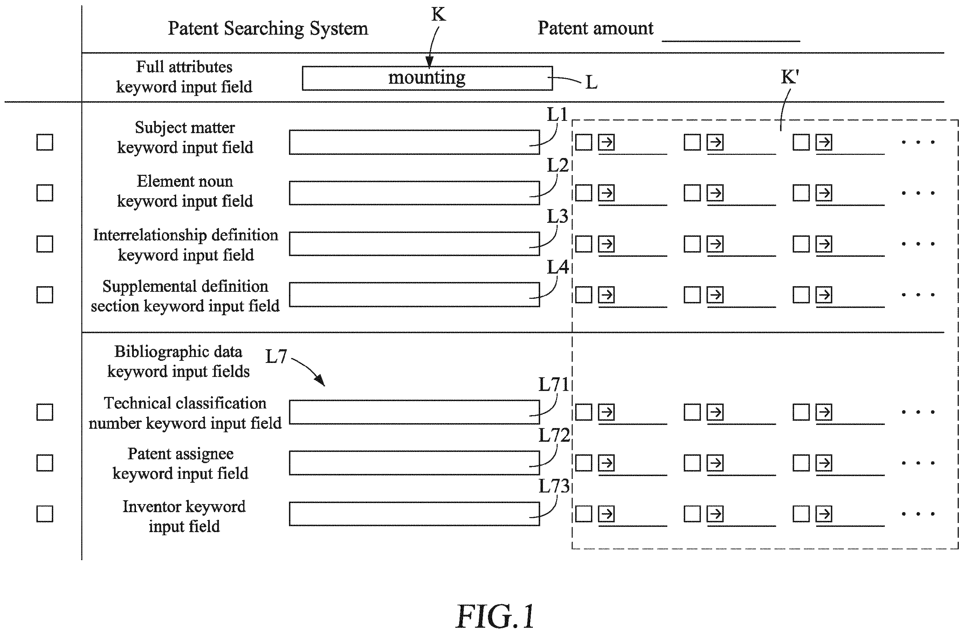

The preferred embodiments of the present invention are described below with reference to Figs. 1 to 10. The description is only for explaining the preferred embodiments of the present invention, but not for limiting the implementation of the present invention.

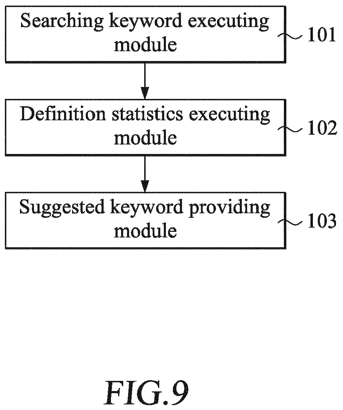

As shown in Fig. 9, a searching keyword suggesting device in one embodiment of the present invention is provided that by means of a searching keyword K, a suggested keyword K' which is informationally related to the searching keyword K is obtained. The searching keyword suggesting device comprises a searching keyword executing module 101, a definition statistics executing module 102 and a suggested keyword providing module 103.

Before the description in detail for each of the modules of the present invention, the definition of the term "structural attribute" of the present invention is firstly given. The structural attribute defined in the present invention comprises, but not limited to, a subject matter attribute, an element noun attribute, an interrelationship definition attribute, a supplemental definition section attribute, a description attribute, an abstract attribute and a bibliographic data attribute.

Fig. 1 shows a schematic diagram of a keyword searching interface according to one embodiment of the present invention. As shown in Fig. 1, the keyword searching interface is provided with keyword input fields including: full attributes keyword input field L, a subject matter keyword input field L1, an element noun keyword input field L2, an interrelationship definition keyword input field L3, a supplemental definition section keyword input field L4 and a bibliographic data keyword input field L7. In addition, the keyword searching interface can further include a description keyword input field and an abstract keyword input field (not shown). In other words, except the full attributes keyword input field L, every structural attribute possesses at least one informationally related keyword input field such that the users can input the searching keyword K in any one of the fields or in any combination of the fields. Fig. 1 takes one single structural attribute possessing one single keyword input field as example. In the other examples, one single structural attribute can possess more than two keyword input fields.

The bibliographic data attribute can be further classified into a technical classification number attribute (for example, IPC, UPC etc.), a patent assignee attribute and an inventor attribute etc. such that the bibliographic data keyword input field L7 can be further classified into a technical classification number keyword input field L71, a patent assignee keyword input field L72 and a inventor keyword input field L73. However the present invention is not limited to this. The present invention can arrange all of the technical classification number attribute, the patent assignee attribute and the inventor attribute to one single input data keyword input field L7. Further the structural attribute possessed by the provided searching keyword K can be of any combination of the structural attribute mentioned above, and the number of the input fields to which each of the structural attributes belong is not limited to one but can be a plural.

The follows describe the searching keyword executing module 101 of the searching keyword suggesting device in the present invention.

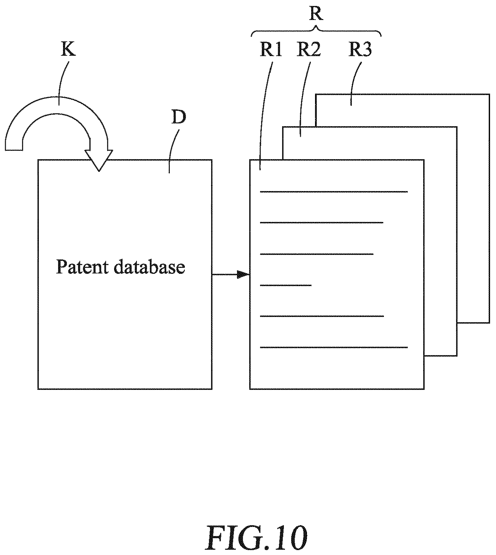

As shown in Fig. 9 and Fig. 10, in the searching keyword executing module 101, the searching keyword K is used to perform a claims searching process and/or a description searching process and/or a bibliographic data searching process in relation to a patent database D so as to obtain a patent searching result R having a plurality of searched result patents R1, R2, R3 ... (as shown in Figs 10). In other words, after the searching keyword K has been input by users to the keyword input fields to which each structural attribute belongs, a claims searching process and/or a description searching process and/or a bibliographic data searching process according to the structural attribute to which the keyword input field having input data belongs is performed. When the searching keyword K is input to the subject matter keyword input field L1, the element noun keyword input field L2, the interrelationship definition keyword input field L3 or a supplemental definition section keyword input field L4, it will be the claims searching process to be executed. And when the searching keyword K is input to the description keyword input field or the abstract keyword input field, it will be the description searching process to be executed. And when the searching keyword K is input to the bibliographic data keyword input field L7, it will be the bibliographic data searching process to be executed. Thereafter, by means of executing the claims searching process, the description searching process or the bibliographic data searching process, a patent searching result having a plurality of searched result patents is obtained, i.e., the patent searching result includes a plurality of searched result patents.

For example, as shown in Fig. 1, when an input data "mounting" is input to the full attributes keyword input field L, the input data "mounting" is used as a searching keyword K, to execute all kinds of searching processes including the claims searching process, the description searching process and the bibliographic data searching process in all of the structural attributes including: the subject matter attribute, the element noun attribute, the interrelationship definition attribute, the supplemental definition section attribute, the abstract attribute and the bibliographic data attribute so as to obtain a plurality of seared result patent R1, R2, R3, ....

One claim of each searched result patents R1, R2, R3 ... is with at least one element definition or at least one description definition. The below is a claim as an example.

"A mounting bracket for a roof window, comprising: a frame mountable element disposed on an edge of the roof window; a roof mountable element connected with the frame mountable element; and a hinge element securely connected with a base of the roof mountable element, wherein the frame mountable element is a flexible material."

It is noted that, the text underlined is an element definition, such as "A mounting bracket", "a roof window", "a frame mountable element", "an edge of the roof window", "a roof mountable element", "the frame mountable element", "a hinge element", and "a base of the roof mountable element". The text non-underlined in the example is a description definition such as "for", "comprising", "disposed on", "connected with", and "securely connected with". The punctuation marks can be considered to be included or not included in the description definition.

Each element definition or each description definition is defined with its structural attribute according to its position in the claim, wherein the structural attribute of element definition is selected from a plurality of structural attributes . For example, since "A mounting bracket" and "a roof window" are in a subject matter position, each one of these element definitions is with a subject matter attribute. For example, since "a frame mountable element", "an edge of the roof window", "a roof mountable element", "the frame mountable element", "a hinge element", and "a base of the roof mountable element" are in an element noun position, each one of these element definitions is with an element noun attribute. The element noun attribute, according to where the element noun is positioned, can be further classified into a primary element noun attribute and a secondary element noun attribute. For example, "a frame mountable element", "a roof mountable element", and "a hinge element" are element definitions defined with a primary element noun attribute, and "an edge of the roof window" and "a base of the roof mountable element" are element definitions defined with a secondary element noun attribute. And each one of "for", "comprising", "disposed on", "connected with", and "securely connected with" is with interrelationship definition attribute. And since "wherein" is a supplemental noun, "the frame mountable element" and "is a flexible material" are classified as having supplemental section attribute.

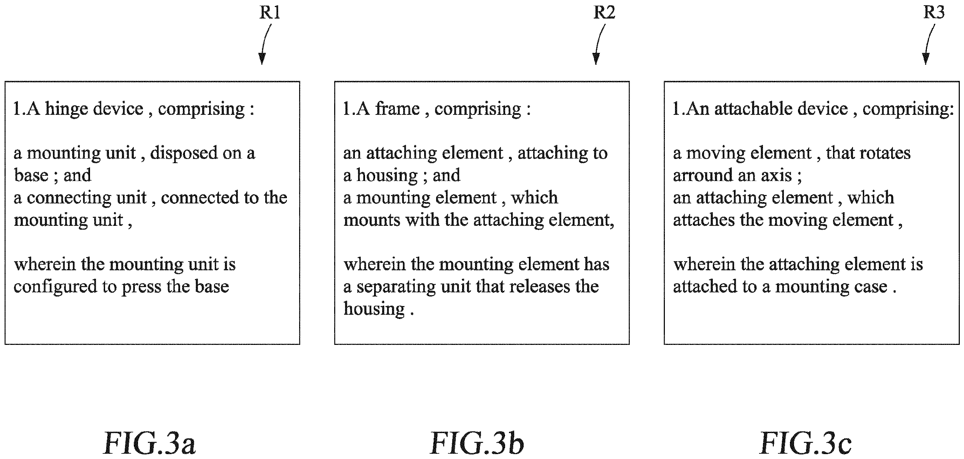

As shown in Fig. 1 and Figs. 3a to 3c, when "mounting" is input in the full attributes keyword input field L, since the full attribute keyword input field L is defined as not limiting to any structural attribute but is defined as covering all structure attribute, the searching process will include all structural attributes by which the claims searching process, the description searching process and the bibliographic data searching process are performed so as to obtain a patent searching result having a plurality of searched result patents R1, R2, R3 .... Please be noted that the plurality of searched result patents R1, R2, R3 ... are all with the keyword "mounting".

Then, the definition statistics executing module 102 is performed to obtain a deduced element definition and/or a deduced description definition by performing statistics calculation of the element definitions and the description definitions for every respective structural attribute in all searched result patents R1, R2, R3 ... of the patent searching result so as to obtain the deduced element definition and/or the deduced description definition that are informationally belonged to respective structural attributes.

Figs. 3a to 3c are examples to illustrate searched result patents, in which Fig. 3a is grabbed because the words of "mounting unit" are with word of "mounting", Fig. 3b is grabbed because the words of "mounting element" are with word of "mounting", and Fig. 3c is grabbed because the words of "mounting case" are with word of "mounting".

In Fig. 3a, the element definitions/the description definitions in relation to respective structural attributes can be found as follows. The element definition of the subject matter attribute is "a hinge device"; the element definitions of the element noun attribute are "mounting unit", "base" and "connecting unit"; and the description definition of the interrelationship definition attribute are "disposed on" and "connected to". It is noted that the description definition of the interrelationship definition attribute "disposed on" is provided to interrelate the element definitions "mounting unit" and "base", and the description definition of the interrelationship definition attribute "connected to" is provided to interrelate the element definitions "connecting unit" and "mounting unit". The data content of the supplemental section attribute is "the mounting unit is configured to press the base" in which element definition and description definition are not classified. However, in the other embodiment, the supplemental section attribute can be further classified into a supplemental section element definition and a supplemental section description definition, wherein, as an example, the supplemental section element definitions are "the mounting unit" and "the base", the supplemental section description definition is "is configured to press", and the supplemental section description definition is provided to interrelate the supplemental section element definitions "the mounting unit" and "the base".

In Fig. 3b, the element definitions/the description definitions in relation to respective structural attributes can be found as follows. The element definition of the subject matter attribute is "frame"; the element definitions of the element noun attribute are "attaching element", "housing" and "mounting element"; and the description definition of the interrelationship definition attribute are "attaching to" and "mounts with". It is noted that the description definition of the interrelationship definition attribute "attaching to" is provided to interrelate the element definitions "attaching element" and "housing", and the description definition of the interrelationship definition attribute "mounts with" is provided to interrelate the element definitions "mounting element" and "attaching element". The data content of the supplemental section attribute is "the mounting element has a separating unit that releases the housing" in which element definition and description definition are not classified. However, in the other embodiment, the supplemental section attribute can be further classified into a supplemental section element definition and a supplemental section description definition, wherein, as an example, the supplemental section element definitions are "the mounting element", "separating unit" and "housing", the supplemental section description definition are "has" and "releases", and the supplemental section description definition is provided to interrelate the supplemental section element definitions "mounting element", "separating unit" and "housing".

In Fig. 3c, the element definitions/the description definitions in relation to respective structural attributes can be found as follows. The element definition of the subject matter attribute is "attachable device"; the element definitions of the element noun attribute are "moving element", "axis" and "attaching element"; and the description definition of the interrelationship definition attribute are "rotate around" and "attaches". It is noted that the description definition of the interrelationship definition attribute "rotate around" is provided to interrelate the element definitions "moving element" and "axis", and the description definition of the interrelationship definition attribute "attach" is provided to interrelate the element definitions "attaching element" and "moving element". The data content of the supplemental section attribute is "the attaching element is attached to a mounting casing" in which element definition and description definition are not classified. However, in the other embodiment, the supplemental section attribute can be further classified into a supplemental section element definition and a supplemental section description definition, wherein, as an example, the supplemental section element definitions are "the attaching element" and "mounting casing", the supplemental section description definition is "is attached to", and the supplemental section description definition is provided to interrelate the supplemental section element definitions "attaching element" and "mounting casing".

Fig. 3a to Fig. 3c are examples illustrating that a plurality of the searched result patents (R1, R2, R3) are grabbed. The amount of the grabbed searched result patents R1, R2, R3 ... can be from several hundreds to more than ten thousands. The plurality of the searched result patents R1, R2, R3 ... are taken as a patent searching result R.

In the definition statistics executing module 102, taking the Figs. 3a to Fig. 3c mentioned above as an example, the statistics counting of the element definitions and/or the description definitions is performed in relation to subject matter attribute, element noun attribute, interrelationship definition attribute and supplemental section attribute in all searched result patents R1, R2, R3 ....

The element definitions obtained in relation to the subject matter attribute are: the "hinge device" in Fig. 3a; "frame" in Fig. 3b; and "attachable device" in Fig. 3c. The element definitions obtained in relation to the element noun attribute are: the "mounting unit" and "connecting unit" in Fig. 3a; "attaching element", "mounting element" in Fig. 3b; and "moving element", "axis" and "attaching" in Fig. 3c. The element definitions obtained in relation to the interrelationship definition attribute are: the "disposed on" and "connected to" in Fig. 3a; "attaching to" and "mounts with" in Fig. 3b; and "rotates around" and "attaches" in Fig. 3c. The element definitions obtained in relation to the supplemental section element definition are: the "mounting unit" and "base" in Fig. 3a; "mounting element", "separating unit" and "housing" in Fig. 3b; and "attaching element" and "mounting case" in Fig. 3c. The element definitions obtained in relation to the supplemental section description definition are: the "configured to press" in Fig. 3a; "has" and "release" in Fig. 3b; and "attached to" in Fig. 3c.

In all obtained element definitions and description definitions mentioned above, there are some filterable defined words, such as "device", "unit", "configure to", "to", "with", "has", "that", "the", "a", "which", "is" etc. As a result, a table of filtering defined word can be established to filter these defined words.

Moreover, the definition statistics executing module 102 can not only directly perform statistics counting of the element definition and/or description definition obtained in relation to all structural attributes, but also can include an original part-of-speech format reverting sub-module that reverts, for all searched result patents R1, R2, R3, ... of the patent searching result R, the part-of-speech format of the element definition and the description definition belonging to each respective structural attribute to an original part-of-speech format such that the statistics counting of the element definition and the description definition are performed based on the original part of speech format.

For example, "mounting" is reverted to an original part-of-speech format "mount", "connecting" is reverted to "connect", "disposed" is reverted to "dispose", "attaching" is reverted to "attach", "mounts" is reverted to "mount", "releases" is reverted to "release", "rotates" is reverted to "rotate", and "attached" is reverted to "attach".

After the original part-of-speech format reverting sub-module has been performed, taking Fig. 3a to Fig. 3c as an example, the element definition and/or description definition obtained in relation to the subject matter attribute are: "hinge", "frame", and "attach". The element definition and/or description definition obtained in relation to the element noun attribute are: "mount", "base", "connect", "attach", "move", "axis", and "case". The element definition and/or description definition obtained in relation to the interrelationship definition attribute are: "dispose", "connect", "press", "attach", "mount", and "rotate around". The element definition and/or description definition obtained in relation to the supplemental section element definition are: "mount", "base", "separate", "housing", "attach", and "mounting case". In other words, if an element definition is with more than two words, the words of the element definition are displayed in total and not separate. However, the present invention is not limited to this, and the words of the element definition can be displayed separately. The obtained statistics results in relation to the supplemental section description definition are: "press", "release", and "attach".

After statistics counting, for all searched result patents R1, R2, R3, ... of the patent searching result R, the element definitions and the description definitions in relation to each structural attribute, the obtained element definitions and the description definitions in relation to each structural attribute are taken as a deduced element definition and/or a deduced description definition. Therefore the deduced element definition and/or the deduced description definition in relation to each respective structural attribute are obtained.

It is noted that the definition statistics executing module 102 counts the occurrence times of the deduced element definition and/or the deduced description definition for each structural attribute, and accordingly sorts a sequence according to the count of occurrence times of the deduced element definition and the deduced description definition for each structural attribute such that a sorting result is obtained.

In another embodiment, the deduced element definition and the deduced description definition obtained by the definition statistics executing module 102 are definitions different from those of the searching keyword but with the same structural attribute to which the searching keyword are designated in the claim searching operation performed by the searching keyword executing module. In other words, when the input of searching keyword is "mounting", the obtained definition "mounting" or "mounts" in the structural attribute will be deleted.

More specifically, the occurrence times of element definitions and description definitions in each structural attributes are counted, and are sorted in a sequence. For example, it is obtained that the element definitions and description definitions in subject matter attribute are: "hinge" (1 time), "frame" (1 time), and "attach" (1 time). The element definitions and description definitions in element noun attribute are: "mount" (3 times), "base" (1 time), "connect" (1 time), "attach" (2 times), "move" (1 time), "axis" (1 time), and "case" (1 time). The element definitions and description definitions in interrelationship definition attribute are: "dispose" (1 time), "connect" (1 time), "press" (1 time), "attach" (2 times), "mount" (1 time), and "rotate around" (1 time). The element definitions and description definitions in supplemental section element definition are: "mount" (3 times), "base" (1 time), "separate" (1 time), "housing" (1 time), "attach" (1 time), and "mounting case" (1 time). The element definitions and description definitions in supplemental section description definition are: "press" (1 time), "release" (1 time), and "attach" (1 time).

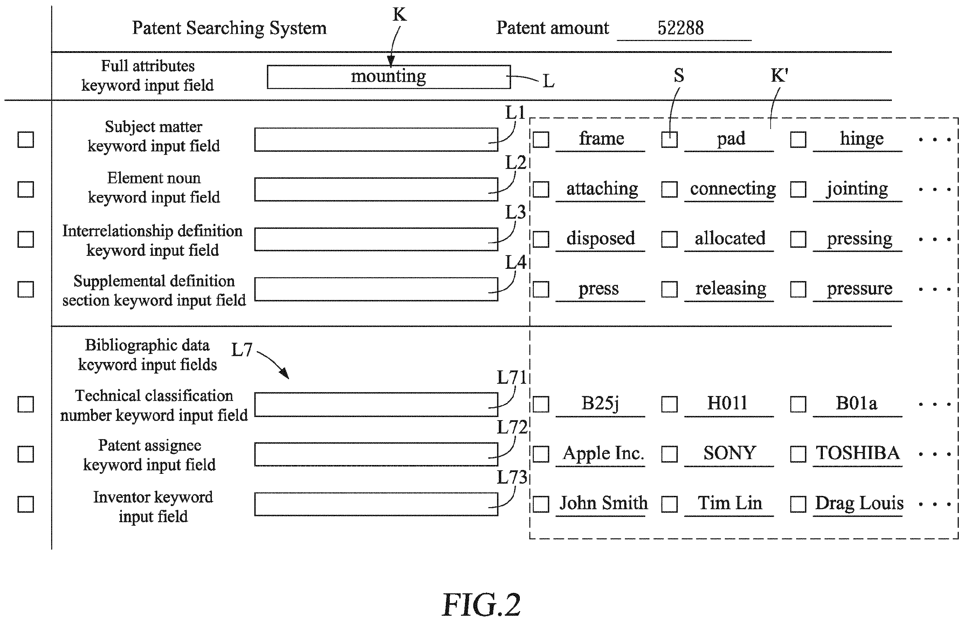

Following the above, the suggested keyword providing module 103 is operated to provide the suggested keyword K', which is/are the deduced element definition and/or the deduced description definition for each structural attribute, according to the sequence sorting result of the deduced element definition and/or the deduced description definition for each structural attribute. As shown in Fig. 2, the obtained word definitions for each structural attribute after the statistics are displayed as the suggested keyword K' for user to choose.

In Fig. 2, the input fields of the present invention further include an international patent classification number attribute input field L71, an assignee attribute input field L72 and an inventor attribute input field L73.

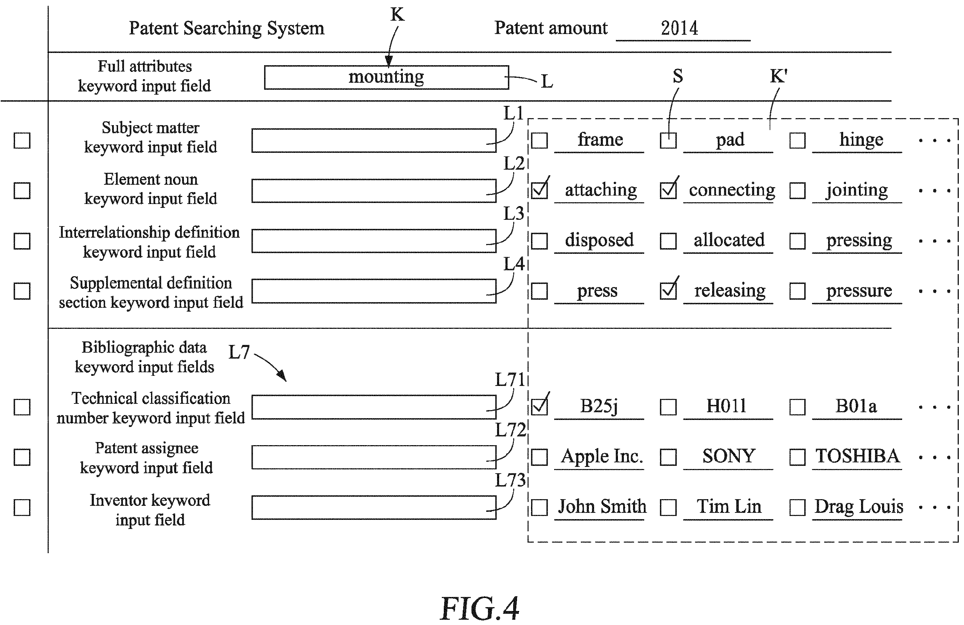

Furthermore, the suggested keyword providing module 103 further includes a suggested keyword choosing module that provides a keyword choosing interface on which a user chooses the suggested keyword K' provided by the suggested keyword providing module 103. In front of each displayed suggested keyword K', there is a suggested keyword check box S for user to choose whether the suggested keyword K' is to be chosen or not. Fig. 4 illustrates a display screen where four keyword input fields are chosen together with an "AND" operation to the chosen keyword input fields . However, the present invention is not limited to that, whereas an "OR" operation to the chosen keyword input fields can be an alternation for operating a deduction process by which the obtained searched result patent will increase.

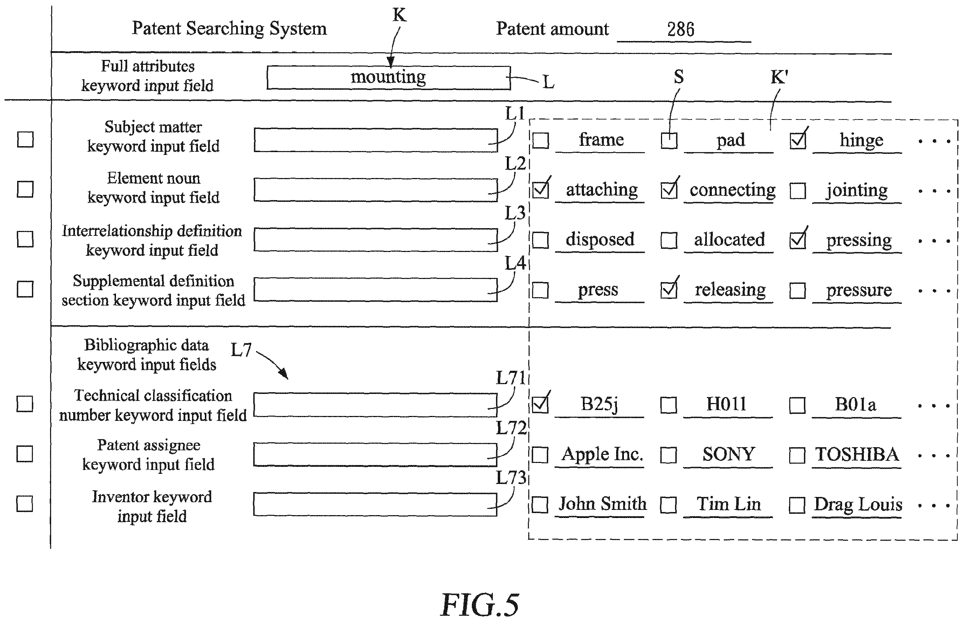

After the suggested keywords K' provided by the suggested keyword providing module are chosen, a patent amount and/or a patent amount variation of the plurality of searched result patents R1, R2, R3 ... are shown. As shown in Fig. 2, after having input "mounting" in the full attribute keyword input field L, the patent amount is 52228. And as shown in Fig. 4, after four keyword input fields in all respective structural attributes are chosen to perform an "AND" operation, the patent amount is changed from 52228 to 2014. Furthermore as shown in Fig. 5, after two more fields have been further chosen to be with six suggested keywords chosen in total to operate an "AND" operation, the patent amount is further changed to 286 such that the patent amount and the patent amount variation can be shown in the screen. User can click the number of 286 to read the 286 searched result patents for further detail reading and analyzing.

As shown in Fig. 2, Fig. 4 and Fig. 5, there is a structural attribute check box at the head of the keyword input fields in each structural attribute. The structural attribute check box can be a selection box or a deletion box. When the structural attribute check box is the deletion box, the structural attribute check box is chosen to delete and not display the input table keyword input fields in the structural attribute so as to simplify the display screen.

The searching keyword suggesting device of the present invention can be used to obtain, in a practical use, a suggested keyword with informational relationship to the searching keyword such that as compared to the synonym method of the prior arts, the present invention is more scientific and logical, as a result that the searching accuracy is improved and the searched result amount is decreased because of the correct searching orientation.

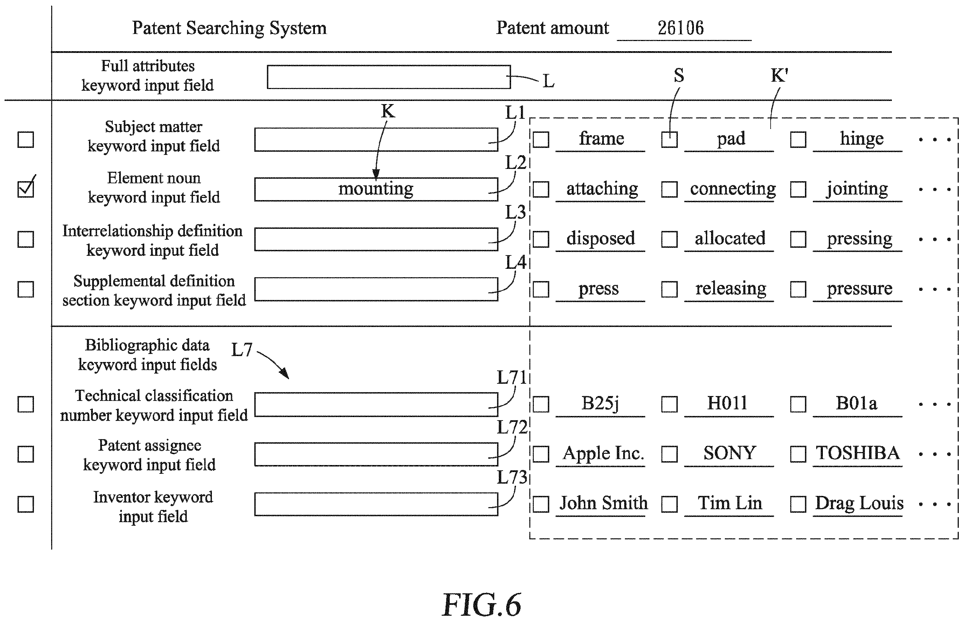

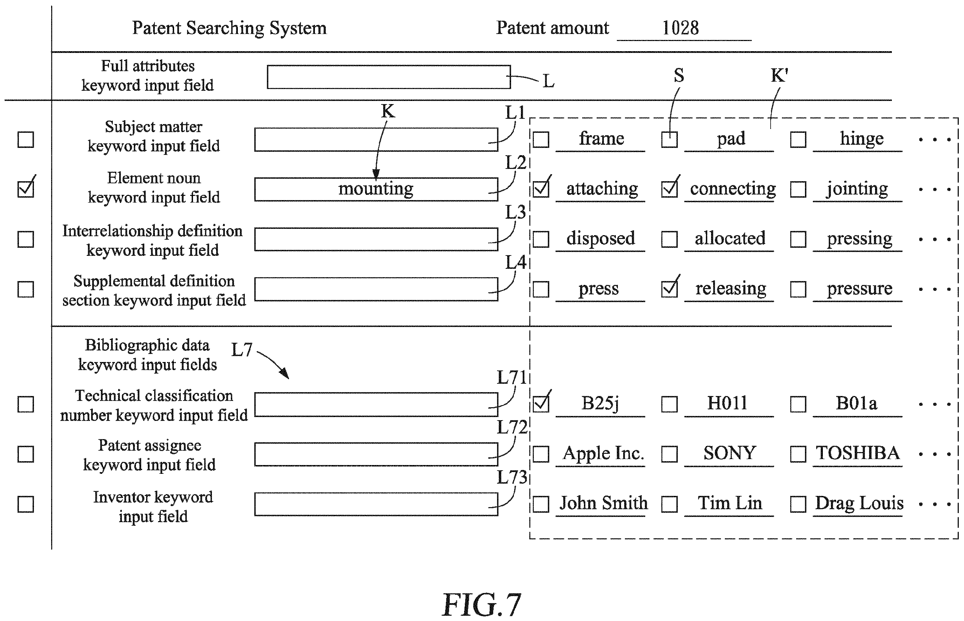

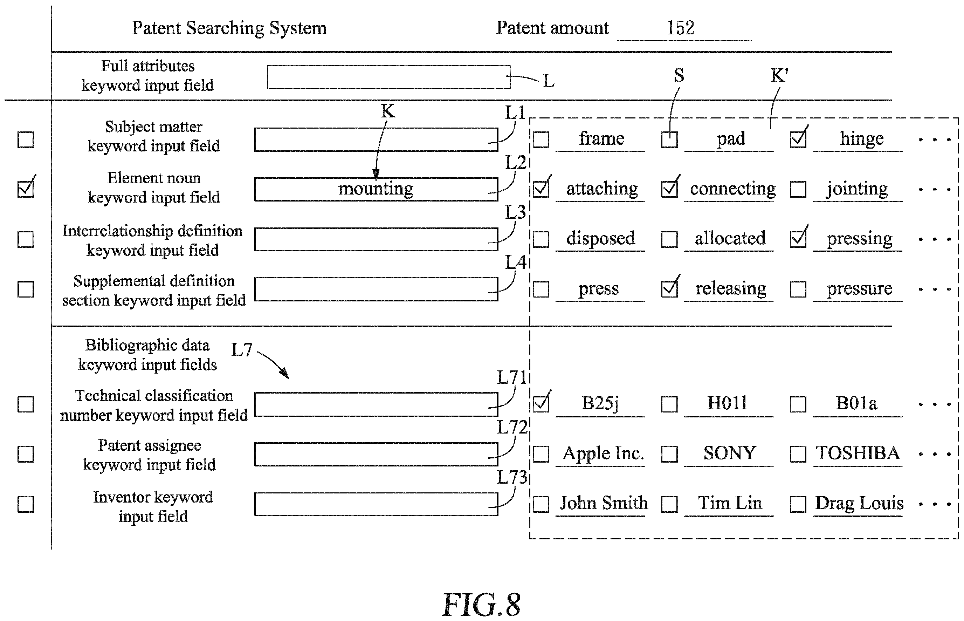

In the searching keyword executing module 101, not only can it input "mounting" in the full attribute keyword input field L, but also as shown in Fig. 6, it can input searching keyword K in the designated keyword input fields (the subject matter keyword input field L1, the element noun keyword input field L2, the interrelationship definition keyword input field L3, or a supplemental section keyword input field L4) to obtain the deduced element definition and/or the deduced description definition for each structural attribute. In Fig. 7, four deduced element definition and/or the deduced description definition are chosen together with an operation of "AND" to obtain the searched result patents in a number of 1028. But, the present invention is not limited to that. Alternatively, the present invention can also perform an "OR" deduction operation on the searching keywords which have been input. If the deduction process is performed, the obtained searched result patent will be increased. Fig. 7 and Fig. 8 are the display when the suggested keyword is chosen subsequently together with the operation of "AND".

Moreover, in an embodiment, the searching keyword K is searched in way of equivalent comparison to the element definition and the description definition in the designated structural attribute. In other words, when "mounting" is input, the plurality of searched result patents R1, R2, R3, ... are chosen since these patents exactly contain the word definition of "mounting". However, the present invention can also apply partial comparison of the searching keyword K such that the partial comparison to the element definition and the description definition in the designated structural attribute can be performed. In other words, when "mounting" is input, the plurality of searched result patents R1, R2, R3, ... having word definitions such as "mounts" or "mounted" in the structural attributes can be obtained.

In summary, the searching keyword suggesting device of the present invention can be used to obtain, in a practical use, a suggested keyword with an informational relationship to the searching keyword such that as compared to the synonym method of the prior arts, the present invention is more scientific and logical, as a result the searching accuracy is improved and the searched result amount is decreased because of the correct searching orientation.

The above description is only an explanation of the preferred embodiments of the present invention. One having ordinary skill in the art can make various modifications according to the above description and the claims defined below. However, those modifications shall still fall within the scope of the present invention.

## Claims

1. A searching keyword suggesting device that, in a patent searching, uses a searching keyword (K) to provide a suggested keyword (K') with informational relationship to the searching keyword (K), **characterized in that** the searching keyword suggesting device comprises:
a searching keyword executing module (101) that performs, based on the searching keyword (K), a claim searching operation and/or a description searching operation and/or a bibliographic data searching operation for data in a patent database (D) to obtain a patent searching result including a plurality of searched result patents, each searched result patent including at least one element definition and at least one description definition, each element definition and each description definition being informationally related to one structural attribute which is one selected from a subject matter attribute, an element noun attribute, an interrelationship attribute and a supplemental definition section attribute;
a definition statistics executing module (102) that obtains a deduced element definition and a deduced description definition by performing statistics calculation, for the searched result patents, of the element definitions and the description definitions that are informationally belonged to respective structural attributes; and
a suggested keyword providing module (103) that provides the suggested keyword (K') by retrieving a word from the deduced element definition and/or the deduced description definition that are informationally belonged to respective structural attribute.

2. The searching keyword suggesting device of claim 1, wherein the deduced element definition and the deduced description definition obtained by the definition statistics executing module (102) are definitions different from the searching keyword (K) but with the same informationally related structural attribute to which the searching keyword (K) are designated in the claim searching operation of the patent database (D) performed by the searching keyword executing module (101), the informationally related structural attribute is one selected from an informationally related subject matter attribute and/or an informationally related element noun attribute and/or an informationally related interrelationship attribute and/or an informationally related supplemental definition section attribute and/or an informationally related description attribute and an informationally related abstract attribute and/or a bibliographic data attribute.

3. The searching keyword suggesting device of claim 1, wherein the searching keyword (K) is searched in way of equivalent comparison and/or in way of partial comparison to the element definition and the description definition having the informationally related structural attribute designated in the claim searching operation and/or the description searching operation and/or the bibliographic data searching operation.

4. The searching keyword suggesting device of claim 2, wherein the searching keyword (K) is searched in way of equivalent comparison and/or in way of partial comparison to the element definition and the description definition having the informationally related structural attribute designated in the claim searching operation and/or the description searching operation and/or the bibliographic data searching operation.

5. The searching keyword suggesting device of claim 3, wherein the definition statistics executing module (102) further includes an original part-of-speech format reverting sub-module that reverts, for the searched result patents of the patent searching result, the part-of-speech format of the element definition and the description definition of the structural attributes to an original part-of-speech format, and performs statistics calculation of the element definition and the description definition based on the original part of speech format.

6. The searching keyword suggesting device of claim 4, wherein the definition statistics executing module (102) further includes an original part-of-speech format reverting sub-module that reverts, for the searched result patents of the patent searching result, the part-of-speech format of the element definition and the description definition of the structural attributes to an original part-of-speech format, and performs statistics calculation of the element definition and the description definition based on the original part of speech format.

7. The searching keyword suggesting device of claim 3 or 4, wherein the definition statistics executing module (102) counts the occurrence times of the deduced element definition and the deduced description definition of structural attribute, sorts a sequence of the deduced element definition and the deduced description definition of structural attribute according to the occurrence times to obtain a sorting result, and enables the suggested keyword providing module (103) to provide the suggested keyword (K') from the deduced element definition and the deduced description definition of the structural attributes according to the sorting result of the deduced element definition and the deduced description definition of structural attributes.

8. The searching keyword suggesting device claim 5 or 6, wherein the definition statistics executing module (102) counts the occurrence times of the deduced element definition and the deduced description definition of structural attribute, sorts a sequence of the deduced element definition and the deduced description definition of structural attribute according to the occurrence times to obtain a sorting result, and enables the suggested keyword providing module (103) to provide the suggested keyword (K') from the deduced element definition and the deduced description definition of the structural attributes according to the sorting result of the deduced element definition and the deduced description definition of structural attributes.

9. The searching keyword suggesting device of claim 7, wherein the suggested keyword providing module (103) is further followed by a suggested keyword choosing module that provides a keyword choosing interface on which a user chooses the suggested keyword (K') provided by the suggested keyword providing module (103).

10. The searching keyword suggesting device of claim 8, wherein the suggested keyword providing module (103) is further followed by a suggested keyword choosing module that provides a keyword choosing interface on which a user chooses the suggested keyword (K') provided by the suggested keyword providing module (103).

11. The searching keyword suggesting device of claim 9, wherein after the suggested keyword (K') provided by the suggested keyword providing module (103) is chosen, a patent amount and/or a patent amount variation of the plurality of searched result patents is shown.

12. The searching keyword suggesting device of claim 10, wherein after the suggested keyword (K') provided by the suggested keyword providing module (103) is chosen, a patent amount and/or a patent amount variation of the plurality of searched result patents is shown.
